(19) Europäisches Patentamt / European Patent Office / Office européen des brevets

(11) **EP 3 620 574 B1**

(12) **EUROPEAN PATENT SPECIFICATION**

(45) Date of publication and mention
of the grant of the patent:
**16.08.2023 Bulletin 2023/33**

(21) Application number: **18794322.0**

(22) Date of filing: **25.04.2018**

(51) International Patent Classification (IPC):
**D07B 1/06** *(2006.01)*     **B29D 30/48** *(2006.01)*
**B60C 15/04** *(2006.01)*

(52) Cooperative Patent Classification (CPC):
**B29D 30/48; B60C 15/04; D07B 1/06**

(86) International application number:
**PCT/JP2018/016799**

(87) International publication number:
**WO 2018/203504 (08.11.2018 Gazette 2018/45)**

(54) **BEAD RING AND METHOD FOR MANUFACTURING SAME**

WULSTRING UND VERFAHREN ZUR HERSTELLUNG DAVON

TRINGLE DE TALON ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.05.2017 JP 2017091798**

(43) Date of publication of application:
**11.03.2020 Bulletin 2020/11**

(73) Proprietor: **The Yokohama Rubber Co., Ltd.
Minato-ku
Tokyo 105-8685 (JP)**

(72) Inventor: **KAKIZAWA, Hiroshi
Hiratsuka-shi
Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
**WO-A1-2010/140521     WO-A1-2010/140521
WO-A1-2010/150450     JP-A- H0 949 018
JP-A- H0 949 018       JP-A- H08 291 369
JP-A- H08 291 369      JP-A- 2002 088 666
JP-A- 2004 161 199     JP-A- 2004 161 199
JP-A- 2007 302 153     JP-A- 2007 302 153
JP-A- 2008 279 721     JP-A- 2008 279 721
JP-A- 2015 536 826     JP-A- 2016 504 502
JP-A- 2016 504 502     JP-A- 2016 538 434
US-A1- 2013 133 804    US-B1- 6 715 331**

**Description**

Technical Field

The present invention relates to a bead ring formed from a bead wire that has been subjected to wire drawing and a method for producing the same. More specifically, the present invention relates to a bead ring that can improve processability during forming while reducing production costs by setting the true strain, tensile strength, and proof stress of the bead wire that constitutes the bead ring to specific ranges.

Background Art

In the prior art, in a method for forming a bead ring of a tire having a predetermined diameter by winding a bead wire into a ring shape, a method has been performed in which a bead wire is unwound from a wire unwinding means such as a bobbin around which a bead wire is wound in advance, and the bead wire is used to form a bead ring (for example, WO 2013/161031 A1). Reference is further made to documents WO 2010/140521 A1 and JP H08 291369 A.
Generally, a bead ring is formed using a bead wire that has been subjected to wire drawing. Specifically, a bead wire before processing is drawn up to a predetermined wire diameter, the bead wire after wire drawing is subjected to a heat treatment, and the bead wire is further drawn to the wire diameter of the final shape. That is, a general bead wire is subjected to wire drawing twice to reach the final shape. Note that the heat treatment after wire drawing is a step of removing strain generated in the wire by wire drawing.
In contrast, when a bead wire is drawn from the initial wire diameter to the wire diameter of the final shape without the heat treatment by, for example, a single wire drawing, the bead wire after wire drawing has an increased degree of wire drawing, and thus tends to increase in proof stress along with the increase of the breaking load on the bead wire. In addition, when a bead ring is formed using such a bead wire, reforming in the bead forming becomes difficult. As a result, the terminal of the bead ring may be curled or deformed, which can cause a problem of deterioration of processability during forming.

Summary of Invention

Technical Problem

An object of the present invention is to provide a bead ring that can improve processability during forming while reducing production costs by setting the true strain, tensile strength, and proof stress of the bead wire that constitutes the bead ring to specific ranges, and a method for producing the same.

Solution to Problem

In order to achieve the object described above, the bead ring of the present invention according to claim 1 is an annular bead ring formed from a bead wire that has been subjected to wire drawing, the bead wire having a true strain $\varepsilon$ of 2.80 or greater as calculated by the following Equation (1), a tensile strength of 2000 MPa or greater, and a proof stress of 1700 MPa to 1980 MPa;

$$\varepsilon = \ln(d_0/d_1)^2 \qquad\qquad (1)$$

where $d_0$: wire diameter of the bead wire before wire drawing [mm], and
$d_1$: wire diameter of the bead wire after wire drawing [mm].

In addition, the method for producing a bead ring of the present invention according to claim 5 includes subjecting a bead wire to wire drawing so as to have a true strain $\varepsilon$ of 2.80 or greater as calculated by the following Equation (1), thereby processing the bead wire having a tensile strength of 2000 MPa or greater, a proof strain of 1700 MPa to 1980 MPa, and winding the bead wire to form an annular bead ring;

$$\varepsilon = \ln(d_0/d_1)^2 \qquad\qquad (1)$$

where $d_0$: wire diameter of the bead wire before wire drawing [mm], and
$d_1$: wire diameter of the bead wire after wire drawing [mm].

Advantageous Effects of Invention

As a result of diligent research on bead rings and methods for producing the same, the inventors of the present invention have obtained the following finding: in order to improve processability during forming of a bead ring formed from a bead wire that has been subjected to wire drawing without undergoing a heat treatment, it is important to set particularly the proof stress of the bead wire to a specific range; and thus have completed the present invention.

In the bead ring of an embodiment of the present invention, the bead wire has a true strain $\varepsilon$ of 2.80 or greater as calculated by Equation (1) above, a tensile strength of 2000 MPa or greater, and a proof stress of 1700 MPa to 1980 MPa, thus allowing improvement of processability during forming. Additionally, in an embodiment of the present invention, the bead wire has a true strain $\varepsilon$ of 2.80 or greater, and does not undergo a heat treatment, and thus keeps the production cost of the bead wire relatively inexpensive, as compared to a bead wire of the related art. This allows reduction of the production cost of the bead ring.

Additionally, in the method for producing a bead ring of an embodiment of the present invention, the bead wire is subjected to wire drawing so as to have a true strain $\varepsilon$ of 2.80 or greater as calculated by Equation (1) above. This allows improvement of processability during forming by processing the bead wire having a tensile strength of 2000 MPa or greater and a proof stress of 1700 MPa to 1980 MPa, and winding the bead wire to form an annular bead ring.

In an embodiment of the present invention, a reforming rate E of the bead wire as calculated by Equation (2) below is preferably from 85% to 100%. This allows effective improvement of processability during forming.

$$E = D_1/D_0 \times 100\% \qquad\qquad (2)$$

where $D_0$: diameter of the bead ring with a terminal of the bead wire fixed [mm], and
$D_1$: diameter of the bead ring with the terminal of the bead wire unfixed [mm].

According to the present invention, the wire residual rotation of the bead wire is preferably $0 \pm 0.25$ times/6 m in the longitudinal direction. This allows effective improvement of processability during forming.

In an embodiment of the present invention, the tensile strength of the bead wire is preferably 2200 MPa or less. This allows effective improvement of processability during forming.

In an embodiment of the present invention, "proof stress" refers to the value of the stress at the intersection point between a straight line and a curved line, when the straight line is drawn in parallel to the elasticity elongation portion from the point of strain 0.2% in a stress-strain curve obtained in the tensile test. Moreover, the wire residual rotation is obtained by withdrawing 6 m of a bead wire from a bobbin around which the bead wire is wound, and measuring the amount of rotation [times/6 m] at the tip of the bead wire in a withdrawn state.

Brief Description of Drawings

FIG. 1   is a perspective cross-sectional view illustrating one example of a bead ring according to an embodiment of the present invention.

FIG. 2   is a cross-sectional view illustrating the bead ring of FIG. 1.

FIG. 3   is a side view illustrating bead rings in which the terminals of the bead wires are fixed and unfixed.

FIG. 4   is an explanatory diagram illustrating a stress-strain curve for a bead wire constituting the bead ring of an embodiment of the present invention.

Description of Embodiments

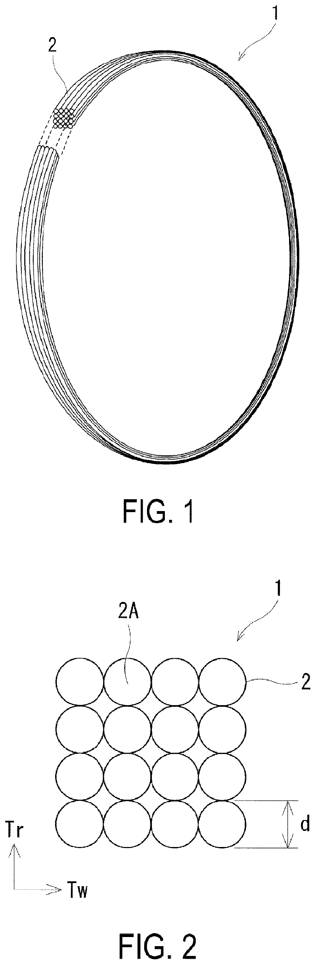

Configurations of embodiments of the present invention will be described in detail below with reference to the accompanying drawings. FIG. 1 and FIG. 2 illustrate a bead ring according to an embodiment of the present invention.

As illustrated in FIG. 1 and FIG. 2, a bead ring 1 according to an embodiment of the present invention is composed of one or a plurality of bead wires 2 wound in a tire circumferential direction. A plurality of winding portions 2A of the bead wire 2 are arranged in a plurality of rows in a tire lateral direction Tw, and are stacked in a plurality of stages in a tire radial direction Tr to form a plurality of layers. In the embodiment of FIG. 2, the structure has four rows of the winding portions 2A both in the tire lateral direction Tw and the tire radial direction Tr, but the structure is not limited to that illustrated in FIG. 2, and a structure having any number of rows and stages of the winding portions 2A may be employed.

Additionally, the bead ring 1 is formed from a bead wire 2 that has been subjected to wire drawing without undergoing a heat treatment. The material of the bead wire 2 is not particularly limited, but is preferably, for example, a steel cord. As illustrated in FIG. 2, when the wire diameter of the bead wire 2 is d, the wire diameter $d_0$ of the bead wire 2 before wire drawing is preferably from 5.0 mm to 5.5 mm, and the wire diameter $d_1$ of the bead wire 2 after wire drawing is preferably from 1.15 mm to 1.35 mm. The bead wire 2 may be wound, for example, after being coated with an unvulcanized rubber.

In the bead ring 1, the true strain $\varepsilon$ of the bead wire 2, which is a constituent member thereof, is 2.80 or greater. "True strain $\varepsilon$" refers to a residual strain generated in the wire by wire drawing applied to the bead wire in the bead wire producing process. The true strain $\varepsilon$ is calculated by the following Equation (1), and is an indicator for evaluating the degree of wire drawing. For example, when the wire diameter $d_0$ of the bead wire 2 before wire drawing is 5.5 mm and the wire diameter $d_1$ of the bead wire 2 after wire drawing is 1.2 mm, the true strain $\varepsilon$ is 3.04. In contrast, when a bead wire is subjected to wire drawing twice as in the related art, the bead wire is generally drawn until the wire diameter reaches approximately 2/3 to 1/2 the initial wire diameter by the first wire drawing. In such wire drawing in the related art, for example, when the initial wire diameter is 5.5 mm, the wire diameter $d_0$ of the bead wire before the second wire drawing is 3.0 mm, and the wire diameter $d_1$ of the bead wire after the second wire drawing is 1.2 mm, the true strain $\varepsilon$ is 1.83 and deviates greatly from the range of the true strain $\varepsilon$ specified in an embodiment of the present invention. The bead wire 2 used in an embodiment of the present invention has been subjected to wire drawing without undergoing a heat treatment, and thus is configured so that the true strain $\varepsilon$ is higher than that of the bead wire in the related art.

$$\varepsilon = \ln(d_0/d_1)^2 \qquad\qquad (1)$$

where $d_0$: wire diameter of the bead wire before wire drawing [mm], and
$d_1$: wire diameter of the bead wire after wire drawing [mm].

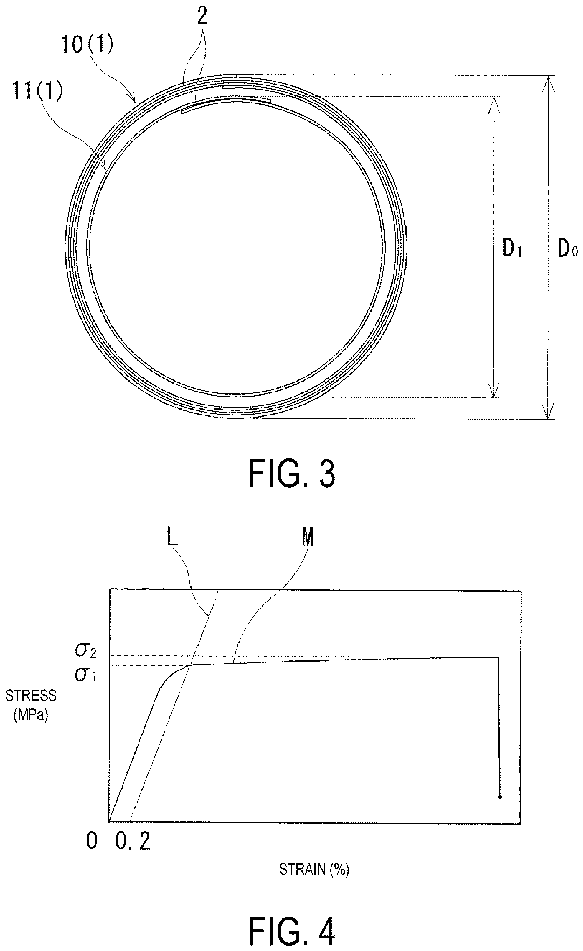

Additionally, in the bead ring 1, the proof strain of the bead wire 2 is 1700 MPa to 1980 MPa. The proof strain of the bead wire 2 corresponds to the stress $\sigma_1$ at the intersection point between the straight line L and the curved line M when the straight line L is drawn in parallel to the elasticity elongation portion from the point of strain 0.2% in the stress-strain curve illustrated in FIG. 4, and is especially an indicator for evaluating processability during forming. Furthermore, the tensile strength of the bead wire 2 is 2000 MPa or greater. The tensile strength of the bead wire 2 corresponds to the stress $\sigma_2$, which is the maximum value of the curved line M in the stress-strain curve illustrated in FIG. 4.

In the bead ring 1 described above, the bead wire 2, which is a constituent member thereof, has a true strain $\varepsilon$ of 2.80 or greater as calculated by Equation (1) above, a tensile strength of 2000 MPa or greater, and a proof stress of 1700 MPa to 1980 MPa, thus allowing improvement of processability during forming. Additionally, the bead wire 2 used in an embodiment of the present invention does not undergo a heat treatment, and thus keeps the production cost of the bead wire relatively inexpensive compared to the bead wires in the related art. This allows reduction of the production cost for the bead ring 2. The processability during forming deteriorates when the proof stress of the bead wire 2 is less than 1700 MPa or greater than 1980 MPa.

FIG. 3 illustrates the bead rings 1 disposed coaxially, the bead rings 1 being in both the states in which the terminals of the bead wire 2 are fixed and unfixed. In FIG. 3, a bead ring 10 is the state in which the terminal of the bead wire 2 is fixed, and a bead ring 11 is a state in which the terminal of the bead wire 2 is unfixed. In other words, the bead ring 10 has a predetermined diameter after the bead forming, and the bead ring 11 is formed by peeling off approximately one round of the bead wire 2 wound in the circumferential direction of the bead ring 10. In these bead rings 10 and 11, the diameter of the bead ring 1 with the terminal of the bead wire 2 fixed is $D_0$, and the diameter of the bead ring 1 with the terminal of the bead wire 2 unfixed is $D_1$. Here, the diameter $D_1$ is made smaller than the diameter $D_0$. In particular, in the relationship between the diameter $D_0$ and the diameter $D_1$, the reforming rate E of the bead wire 2 as calculated by Equation (2) below is preferably from 85% to 100%, and more preferably has an upper limit of less than 100%. The appropriate setting of the reforming rate E of the bead wire 2 allows effective improvement of processability during forming.

$$E = D_1/D_0 \times 100\% \qquad\qquad (2)$$

where $D_0$: diameter of the bead ring with the terminal of the bead wire fixed [mm], and
$D_1$: diameter of the bead ring with the terminal of the bead wire unfixed [mm].

In the bead ring 1, the wire residual rotation of the bead wire 2 is preferably $0 \pm 0.25$ times/6 m in the longitudinal direction. The appropriate setting of the residual rotation of the bead wire 2 in this manner allows effective improvement of processability during forming. Here, when the bead wire 2 is subjected to strong processing to increase the true strain $\varepsilon$, the wire residual rotation may fall outside the range described above, and processability during forming tends to deteriorate.

Additionally, the tensile strength of the bead wire 2 is preferably 2200 MPa or less. The appropriate setting of the tensile strength of the bead wire 2 in this manner allows effective improvement of processability during forming. Here, when the tensile strength of the bead wire 2 is greater than 2200 MPa, the bead wire 2 is embrittled and can be easily broken.

Next, a method for producing a bead ring according to an embodiment of the present invention will be described. In the method for producing a bead ring of an embodiment of the present invention, the bead wire 2 is subjected to wire drawing so as to have a true strain $\varepsilon$ of 2.80 or greater as calculated by Equation (1) below. At this time, the bead wire is drawn from the initial wire diameter to the wire diameter of the final shape by wire drawing, and is not subjected to a heat treatment in the wire drawing through which the wire diameter $d_0$ of the bead wire 2 before wire drawing reaches the wire diameter $d_1$ of the bead wire 2 after wire drawing.

$$\varepsilon = \ln(d_0/d_1)^2 \qquad\qquad (1)$$

where $d_0$: wire diameter of the bead wire before wire drawing [mm], and
$d_1$: wire diameter of the bead wire after wire drawing [mm].

Thereafter, the bead wire 2 is processed so as to have a tensile strength of 2000 MPa or greater and a proof stress of 1700 MPa to 1980 MPa, and then the bead wire 2 is wound to form an annular bead ring 1. Here, in the processing of the bead wire 2 to have a proof stress in a specific range, the bead wire 2 is passed through a corrective roller so as to alleviate the structural orientation in the bead wire 2. This allows reduction of the proof stress of the bead wire 2.

According to the bead ring 1 thus produced, the bead wire 2 is subjected to wire drawing so as to have a true strain $\varepsilon$ of 2.80 or greater as calculated by Equation (1) above, thereby processing the bead wire 2 having a tensile strength of 2000 MPa or greater, a proof strain of 1700 MPa to 1980 MPa, and winding the bead wire 2 to form an annular bead ring 1, thus allowing improvement of processability during forming. Additionally, the bead wire 2 used in an embodiment of the present invention does not undergo a heat treatment, and thus keeps the production cost of the bead wire relatively inexpensive in comparison with the bead wires in the related art. As a result, the production cost of the bead ring 2 can be reduced. Here, when the proof stress of the bead wire 2 is less than 1700 MPa or greater than 1980 MPa, processability during forming will deteriorate.

The bead ring 1 produced by the producing method described above may also be used as a bead core of a pneumatic tire.

Example

As annular bead rings formed from a bead wire that has been subjected to wire drawing, bead rings of Examples 1 to 3 were made, in which the wire diameter $d_0$ of the bead wire before wire drawing [mm], wire diameter $d_1$ of the bead wire after wire drawing [mm], the true strain $\varepsilon$ ($\ln(d_0/d_1)^2$), tensile strength [MPa], proof stress [MPa], reforming rate of bead wire [%], and wire residual rotation [times/6 m] were set as in Table 1. In Examples 1 to 3, a structure composed of a bead wire subjected to wire drawing without undergoing a heat treatment was employed. The examples 1 and 3 belong to the scope of the present invention.

For comparison, a bead ring of a conventional example was prepared, which is formed from a bead wire that had been subjected to wire drawing twice, and underwent a heat treatment between the first and second wire drawing steps. In the conventional example, the initial wire diameter of the bead wire was 5.5 mm, the wire diameter $d_0$ of the bead wire before the second wire drawing was 2.0 mm, and the wire diameter $d_1$ of the bead wire after the second wire drawing was 1.2 mm. Additionally, bead rings of Comparative Examples 1 and 2 were prepared using the same structure as in Example 1, except that the proof stress and the wire residual rotation [times/6 m] were changed.

These test tires were evaluated for the production cost and forming productivity, and the results are shown in Table 1.

Production cost:

The production cost of the bead rings was evaluated. In the evaluation result, the case where the production cost was relatively low was rated "Good", the case where the production cost was relatively high was rated "Acceptable", and the case where the production cost was extremely high was rated "Fail".

Forming Productivity:

The productivity in the bead forming of the bead rings was evaluated. In the evaluation result, the case where the productivity was high was rated "Excellent", the case where the productivity was relatively high was rated "Good", and the case where the productivity was low was rated "Fail".

[Table 1]

| | Conventional Example | Comparative Example 1 | Comparative Example 2 | Example 1 | Example 2 | Example 3 |
|---|---|---|---|---|---|---|
| Wire diameter $d_0$ of bead wire before wire drawing [mm] | 3.0 | 5.5 | 5.5 | 5.5 | 5.5 | 5.5 |
| Wire diameter $d_1$ of bead wire after wire drawing [mm] | 1.2 | 1.2 | 1.2 | 1.2 | 1.2 | 1.2 |
| True strain $\varepsilon$ $(\ln(d_0/d_1)^2)$ | 1.83 | 3.04 | 3.04 | 3.04 | 3.04 | 3.04 |
| Tensile strength [MPa] | 1900 | 2100 | 2100 | 2100 | 2100 | 2200 |
| Proof stress [MPa] | 1750 | 2000 | 1650 | 1750 | 1750 | 1950 |
| Reforming rate of bead wire [%] | 90 | 105 | 80 | 90 | 90 | 95 |
| Wire residual rotation [times/6 m] | 0 | 0 | 0 | 0 | 0.5 | 0 |
| Production cost | Acceptable | Good | Good | Good | Good | Good |
| Forming productivity | Excellent | Fail | Fail | Excellent | Good | Good |

As can be seen from Table 1, the bead rings of Examples 1 to 3 exhibited reduced production costs and improved forming productivity as compared to the conventional example by setting the true strain, tensile strength, and proof stress of the bead wires to specific ranges.

On the other hand, in Comparative Example 1, since the proof stress and reforming rate of the bead wire were set to be relatively high, the terminal of the bead ring was curled, which resulted in deterioration of forming productivity. In Comparative Example 2, since the proof stress and reforming rate of the bead wire were set to be relatively low, the inner terminal of the bead ring was curled, which resulted in deterioration of forming productivity. In Example 2, since the wire residual rotation was set to be high, there was a risk of deforming. In Example 3, since the tensile strength was set to be high, there was a risk of wire breakage.

Reference Signs List

1 Bead ring
2 Bead wire
2A Winding portion
d Wire diameter of bead wire
D Diameter of bead ring

**Claims**

**1.** An annular bead ring (1) formed from a bead wire (2) that has been subjected to wire drawing, the bead wire (2) having a true strain $\varepsilon$ of 2.80 or greater as calculated by Equation (1), and a tensile strength of 2000 MPa or greater;

$$\varepsilon = \ln(d_0/d_1)^2 \qquad\qquad (1)$$

where $d_0$: wire diameter of the bead wire (2) before wire drawing [mm], and
$d_1$: wire diameter of the bead wire (2) after wire drawing [mm], **characterized in that**
the bead wire (2) has a proof stress of 1700 MPa to 1980 MPa, and
a wire residual rotation of the bead wire (2) is $0 \pm 0.25$ times/6 m in the longitudinal direction.

2. The bead ring according to claim 1, wherein

a reforming rate E of the bead wire (2) is from 85% to 100% as calculated by Equation (2);

$$E = D_1/D_0 \times 100\% \qquad (2)$$

where
$D_0$: diameter of the bead ring (1) with a terminal of the bead wire (2) fixed [mm], and
$D_1$: diameter of the bead ring (1) with the terminal of the bead wire (2) unfixed [mm].

3. The bead ring according to claim 1 or 2, wherein
the tensile strength of the bead wire (2) is 2200 MPa or less.

4. The bead ring according to claim 1, wherein

the tensile strength of the bead wire (2) is 2200 MPa or less;
the wire diameter $d_1$ of the bead wire (2) after wire drawing is from 1.15 mm to 1.35 mm;
a reforming rate E of the bead wire (2) as calculated by $E = D_1/D_0 \times 100\%$ is from 85% to 100%, where

$D_0$ is a diameter (mm) of the bead ring (1) with a terminal of the bead wire (2) fixed and
$D_1$ is a diameter (mm) of the bead ring (1) with the terminal of the bead wire (2) unfixed.

5. A method for producing a bead ring (1), comprising subjecting a bead wire (2) to wire drawing so as to have a true strain $\varepsilon$ of 2.80 or greater as calculated by Equation (1), thereby processing a bead wire (2) having a tensile strength of 2000 MPa or greater, and winding the bead wire (2) to form an annular bead ring (1);

$$\varepsilon = \ln(d_0/d_1)^2 \qquad (1)$$

where

$d_0$: wire diameter of the bead wire (2) before wire drawing [mm], and
$d_1$: wire diameter of the bead wire (2) after wire drawing [mm], **characterized in that**
the bead wire (2) has a proof stress of 1700 MPa to 1980 MPa, and
a wire residual rotation of the bead wire (2) is $0 \pm 0.25$ times/6 m in the longitudinal direction.

6. The method for producing a bead ring according to claim 5, wherein

a reforming rate E of the bead wire (2) is from 85% to 100% as calculated by Equation (2);

$$E = D_1/D_0 \times 100\% \qquad (2)$$

where
$D_0$: diameter of the bead ring (1) with a terminal of the bead wire (2) fixed [mm], and
$D_1$: diameter of the bead ring (1) with the terminal of the bead wire (2) unfixed [mm].

7. The method for producing a bead ring according to claim 5 or 6, wherein the tensile strength of the bead wire (2) is 2200 MPa or less.

8. The method for producing a bead ring according to claim 5, wherein

the tensile strength of the bead wire (2) is 2200 MPa or less;

the wire diameter $d_1$ of the bead wire (2) after wire drawing is from 1.15 mm to 1.35 mm;

a reforming rate E of the bead wire (2) as calculated by E = $D_1/D_0$ x 100% is from 85% to 100%, where

$D_0$ is a diameter (mm) of the bead ring (1) with a terminal of the bead wire (2) fixed and

$D_1$ is a diameter (mm) of the bead ring (1) with the terminal of the bead wire (2) unfixed.

**Patentansprüche**

1. Ringförmiger Wulstring (1), der aus einem Reifenwulstdraht (2) ausgebildet ist, der einem Drahtziehen unterzogen wurde, wobei der Reifenwulstdraht (2) eine echte Beanspruchung ε von 2,80 oder mehr, wie durch Gleichung (1) berechnet, und eine Zugfestigkeit von 2000 MPa oder mehr aufweist;

$$\varepsilon = \ln(d_0/d_1)^2 \qquad (1)$$

wobei $d_0$: Drahtdurchmesser des Reifenwulstdrahts (2) vor dem Drahtziehen [mm], und
$d_1$: Drahtdurchmesser des Reifenwulstdrahts (2) nach dem Drahtziehen [mm],
**dadurch gekennzeichnet, dass**
der Reifenwulstdraht (2) eine Dehngrenze von 1700 MPa bis 1980 MPa aufweist, und
eine Drahtrestdrehung des Reifenwulstdrahts (2) 0 ± 0,25-mal/6 m in der Längsrichtung beträgt.

2. Wulstring gemäß Anspruch 1, wobei

eine Nachformungsrate E des Reifenwulstdrahts (2) von 85 % bis 100 % beträgt, berechnet durch Gleichung (2);

$$E = D_1/D_0 \text{ x } 100\ \% \qquad (2)$$

wobei
$D_0$: Durchmesser des Wulstrings (1) mit einer Endstelle des Reifenwulstdrahts (2) fixiert [mm], und
$D_1$: Durchmesser des Wulstrings (1) mit der Endstelle des Reifenwulstdrahts (2) unfixiert [mm].

3. Wulstring nach Anspruch 1 oder 2, wobei
die Zugfestigkeit des Reifenwulstdrahts (2) 2200 MPa oder weniger beträgt.

4. Wulstring gemäß Anspruch 1, wobei

die Zugfestigkeit des Reifenwulstdrahts (2) 2200 MPa oder weniger beträgt;
der Drahtdurchmesser $d_1$ des Reifenwulstdrahts (2) nach dem Drahtziehen von 1,15 mm bis 1,35 mm beträgt;
eine Nachformungsrate E des Reifenwulstdrahts (2) wie berechnet durch E = $D_1/D_0$ x 100 % von 85 % bis 100 % beträgt, wobei
$D_0$ ein Durchmesser (mm) des Wulstrings (1) mit einer Endstelle des Reifenwulstdrahts (2) fixiert ist, und
$D_1$ ein Durchmesser (mm) des Wulstrings (1) mit der Endstelle des Reifenwulstdrahts (2) unfixiert ist.

5. Verfahren zum Herstellen eines Wulstrings (1), umfassend

Unterziehen eines Reifenwulstdrahts (2) dem Drahtziehen, um eine echte Beanspruchung ε von 2,80 oder mehr aufzuweisen, wie durch Gleichung (1) berechnet, wobei dadurch ein Reifenwulstdraht (2) verarbeitet wird, der eine Zugfestigkeit von 2000 MPa oder mehr aufweist, und der Reifenwulstdraht (2) aufgewickelt wird, um einen ringförmigen Wulstring (1) auszubilden;

$$\varepsilon = \ln(d_0/d_1)^2 \qquad (1)$$

wobei
$d_0$: Drahtdurchmesser des Reifenwulstdrahts (2) vor dem Drahtziehen [mm], und
$d_1$: Drahtdurchmesser des Reifenwulstdrahts (2) nach Drahtziehen [mm],

**dadurch gekennzeichnet, dass**

der Reifenwulstdraht (2) eine Dehngrenze von 1700 MPa bis 1980 MPa aufweist, und
eine Drahtrestdrehung des Reifenwulstdrahts (2) $0 \pm 0,25$-mal/6 m in der Längsrichtung beträgt.

**6.** Verfahren zum Herstellen eines Wulstrings gemäß Anspruch 5, wobei

eine Nachformungsrate E des Reifenwulstdrahts (2) von 85 % bis 100 % beträgt, berechnet durch Gleichung (2);

$$E = D_1/D_0 \times 100 \% \qquad (2)$$

wobei
$D_0$: Durchmesser des Wulstrings (1) mit einer Endstelle des Reifenwulstdrahts (2) fixiert [mm], und
$D_1$: Durchmesser des Wulstrings (1) mit der Endstelle des Reifenwulstdrahts (2) unfixiert [mm].

**7.** Verfahren zum Herstellen eines Wulstrings gemäß Anspruch 5 oder 6, wobei
die Zugfestigkeit des Reifenwulstdrahts (2) 2200 MPa oder weniger beträgt.

**8.** Verfahren zum Herstellen eines Wulstrings gemäß Anspruch 5, wobei

die Zugfestigkeit des Reifenwulstdrahts (2) 2200 MPa oder weniger beträgt;
der Drahtdurchmesser $d_1$ des Reifenwulstdrahts (2) nach dem Drahtziehen von 1,15 mm bis 1,35 mm beträgt;
eine Nachformungsrate E des Reifenwulstdrahts (2) wie berechnet durch $E = D_1/D_0 \times 100 \%$ von 85 % bis 100 % beträgt, wobei
$D_0$ ein Durchmesser (mm) des Wulstrings (1) mit einer Endstelle des Reifenwulstdrahts (2) fixiert ist, und
$D_1$ ein Durchmesser (mm) des Wulstrings (1) mit der Endstelle des Reifenwulstdrahts (2) unfixiert ist.

## Revendications

**1.** Talon annulaire (1) formé d'une tringle (2) soumise à un tréfilage, la tringle (2) ayant une déformation réelle $\varepsilon$ de 2,80 ou plus comme calculé par l'équation (1), et une résistance à la traction de 2000 MPa ou plus ;

$$\mathcal{E} = \ln(d_0/d_1)^2 \quad (1)$$

où $d_0$ : diamètre de fil de la tringle (2) avant tréfilage [mm], et
$d_1$ : diamètre de fil de la tringle (2) après tréfilage [mm],
**caractérisé en ce que**
la tringle (2) présente une limite d'élasticité de 1700 MPa à 1980 MPa, et
une rotation résiduelle de fil de la tringle (2) est de $0 \pm 0,25$ fois/6 m dans la direction longitudinale.

**2.** Talon selon la revendication 1, dans lequel

une vitesse de reformage E de la tringle (2) est de 85 % à 100 % telle que calculée par l'équation (2) ;

$$E = D_1/D_0 \times 100 \% \quad (2)$$

où
$D_0$ : diamètre du talon (1) avec une extrémité de la tringle (2) fixe [mm], et
$D_1$ : diamètre du talon (1) avec l'extrémité de la tringle (2) non fixe [mm].

**3.** Talon selon la revendication 1 ou 2, dans lequel
la résistance à la traction de la tringle (2) est de 2200 MPa ou moins.

**4.** Talon selon la revendication 1, dans lequel

la résistance à la traction de la tringle (2) est de 2200 MPa ou moins ;
le diamètre de fil di de la tringle (2) après tréfilage est de 1,15 mm à 1,35 mm ;
une vitesse de reformage E de la tringle (2) telle que calculée par E = D1/D0 x 100 % est de 85 % à 100 %, où $D_0$ est un diamètre (mm) du talon (1) avec une extrémité de la tringle (2) fixe et
$D_1$ est un diamètre (mm) du talon (1) avec l'extrémité de la tringle (2) non fixe.

**5.** Procédé de production d'un talon (1), comprenant

la soumission d'une tringle (2) à un tréfilage de manière à avoir une déformation réelle $\varepsilon$ de 2,80 ou plus comme calculée par l'équation (1), ce qui permet de traiter une tringle (2) ayant une résistance à la traction de 2000 MPa ou plus, et l'enroulement de la tringle (2) pour former un talon annulaire (1) ;

$$\varepsilon = \ln(d_0/d_1)^2 \quad (1)$$

où
$d_0$ : diamètre de fil de la tringle (2) avant tréfilage [mm], et
$d_1$ : diamètre de fil de la tringle (2) après tréfilage [mm],
**caractérisé en ce que** la tringle (2) présente une limite d'élasticité de 1700 MPa à 1980 MPa, et
une rotation résiduelle de fil de la tringle (2) est de 0 $\pm$ 0,25 fois/6 m dans la direction longitudinale.

**6.** Procédé de fabrication d'un talon selon la revendication 5, dans lequel

une vitesse de reformage E de la tringle (2) est de 85 % à 100 % telle que calculée par l'équation (2) ;

$$E = D_1/D_0 \times 100 \% \quad (2)$$

où
$D_0$ : diamètre du talon (1) avec une extrémité de la tringle (2) fixe [mm], et
$D_1$ : diamètre du talon (1) avec l'extrémité de la tringle (2) non fixe [mm],

**7.** Procédé de fabrication d'un talon selon la revendication 5 ou 6, dans lequel
la résistance à la traction de la tringle (2) est de 2200 MPa ou moins.

**8.** Procédé de fabrication d'un talon selon la revendication 5, dans lequel

la résistance à la traction de la tringle (2) est de 2200 MPa ou moins ;
le diamètre de fil di de la tringle (2) après tréfilage est de 1,15 mm à 1,35 mm ;
une vitesse de reformage E de la tringle (2) telle que calculée par E = $D_1/D_0$ x 100 % est de 85 % à 100 %, où $D_0$ est un diamètre (mm) du talon (1) avec une extrémité de la tringle (2) fixe et
$D_1$ est un diamètre (mm) du talon (1) avec l'extrémité de la tringle (2) non fixe.

2

1

FIG. 1

2A

1

2

Tr

Tw

d

FIG. 2

## FIG. 3

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013161031 A1
- WO 2010140521 A1

- JP H08291369 A